# EUROPEAN PATENT SPECIFICATION

(11) **EP 4 322 740 B1**
(45) Date of publication and mention of the grant of the patent: **26.03.2025**
(21) Application number: 22722492.0
(22) Date of filing: 12.04.2022
(51) Int. Cl.: A01G 13/02

(54) **WEATHER PROTECTION MODULE FOR FRUIT TREE CROPS, IN PARTICULAR FOR CHERRY TREES**
WETTERSCHUTZMODUL FÜR FRUCHTBAUMKULTUREN, INSBESONDERE FÜR KIRSCHENBÄUME
MODULE DE PROTECTION CONTRE LES INTEMPÉRIES POUR DES CULTURES DE TYPE ARBRES FRUITIERS, EN PARTICULIER POUR DES CERISIERS

(30) Priority: 16.04.2021 IT 202100009614
(43) Date of publication of application: 21.02.2024
(73) Proprietor: Venturi, Walter, 23851 Galbiate (LC) (IT)
(72) Inventor: Venturi, Walter, 23851 Galbiate (LC) (IT)
(74) Representative: De Bortoli, Tiziano
(86) International application number: PCT/EP2022/059769
(87) International publication number: WO 2022/218990

(56) References cited:
- DE-U1- 8 411 432
- ES-A1- 2 374 255
- US-A1- 2011 067 298

## Description

### TECHNICAL FIELD

The present invention falls within the field of the production of rain/hail protection covering structures for fruit trees, in particular for orchards in which the fruit trees are arranged in rows. More precisely, the present invention relates to a protection module that can change its configuration rapidly so as to protect the fruit trees in case of bad weather (rain, or potentially dangerous weather conditions) and allow exposure to sunlight when the weather conditions are instead favourable for ripening the fruit.

### BACKGROUND ART

In the field of crops in general (orchards, vineyards and the like) the use of covering systems, the main function of which is to protect the crops from the elements (rain, hail, wind, sunlight), is widely known. Cherry crops, for example, must be protected as much as possible against rain to avoid cracks from forming in the fruit, which can also occur in those ready to be harvested and marketed. As is known, this phenomenon is more frequent combined with wet/damp seasonal trends that occur during the phenological stage of veraison or more generally of ripening. Cracking of the fruit is caused by the excessive availability of water and by the increase of the cell tension and volume of the pulp, with a negative effect on the epidermis of the skin, which dilates beyond the limits of elasticity and cracks. The crack represents an access route for infections generated by various fungal pathogens that can propagate easily through contact towards the other fruit.

In order to protect cherry crops producer make use of semi-permanent covering systems, where these systems use covering elements, formed by polyethylene sheets, supported by poles partially embedded at a greater height than the trees to be protected (typically around 5 metres). To hold the sheets in position, a complex system of tie rods and ground anchors is provided. Typically, the covering sheets are deployed over the fruit trees at the start of the season and removed only at the end of the season. In fact, substantial manpower is required to unfold and tie the sheets, or to fold them back, over the cherry trees. By leaving them in the extended position for the whole season operations requiring manpower can be minimized.

For this reason, low density polyethylene or other materials with high transmittance are normally used. However, if on the one hand the trees and fruits are not subjected to damage by rain and/or hail, on the other the constant presence of a plastic sheet reduces the amount of UV rays and the circulation of carbon dioxide to the plants. These conditions lead to thinner leaves and fruits of lower quality with respect to those that can be grown in the open air, i.e., without covering elements.

Moreover, the constant presence of the covering sheets also makes picking operations difficult due to the high temperatures that are generated under the covered region. Therefore, these conditions limit the performance of the pickers, when maximum working speeds would instead be required.

To overcome, at least in part, the drawbacks described above, in recent years various solutions have been proposed, aimed at making the covering sheets easier to move from a protective to a non-protective position. In particular, these solutions provide for the use of tie rods and/or idler elements (for example pulleys) through which the operators move the sheets to the desired position or fold or extend them according to need. Examples of these solutions are described, for example, in the patent applications EP2910109, US 5265373, and EP3656206. Other protection modules are described in US2011/0067298 A1 and ES2374255.

Nonetheless, these solutions have various drawbacks, the main one being the complexity of their construction, in particular in relation to the tie rods used and to the guide means required to allow movement of the sheets or alternatively their retraction or extension. In addition to this, most of these systems require lengthy times and considerable manpower to change the configuration of the system from the covering to the non-covering condition, or vice versa. This aspect is critical in proportion to the extension of the protected area or to the extension of the protection system.

Another drawback, once again linked to the complexity of current solutions, is found in the footprint that accompanies conventional covering systems with particular reference to the tie rods used to move the covering sheets. In many cases, these tie rods make it difficult to access the trees to pick the fruit and/or to care for the ground in proximity of the trees. This aspect has a negative influence on the times required for these operations.

### SUMMARY

In relation to the above, the main aim of the present invention is to provide a protection module for fruit trees arranged in rows. Within this aim, a first object of the present invention is to provide a protection module that can change rapidly from a protective configuration to a non-protective, or minimally protective, configuration of the fruit trees, or vice versa. Another object of the present invention is to provide a protection module in which this change of configuration can be implemented with minimal operation by the operators. Another object of the present invention is to provide a protection module that is sturdy and compact and that does not obstruct access to the fruit trees. One more object of the present invention is to provide a protection module that can be easily transported and easily installed in proximity of the crops to be protected. Yet another object is to provide a protection module that is reliable and easy to produce at competitive costs.

The aim and the objects indicated above are achieved through a protection module for total or partial protection of a row of fruit trees, wherein said module comprises:
- a support structure comprising a first upright and a second upright anchored to the ground so as to be spaced along a reference direction corresponding to the direction along which said row develops;
- a drum supported by said uprights so that its longitudinal axis is aligned with a direction of development of said row and so as to occupy a position above said trees of said row;
- drive means configured to rotate the drum in both possible directions of rotation;
- at least one first covering element and at least one second covering element fixed to the drum for winding around, or unwinding from, said drum according to its direction of rotation;
- a first guiding assembly and a second guiding assembly supported respectively by the first upright and by the second upright, wherein the guiding assemblies are operatively connected to the covering elements to guide them, during the rotation of said drum, between a first reference position and a second reference position, on opposite sides with respect to a vertical reference plane containing the longitudinal axis of the drum, said reference positions being characteristic, respectively, of a *"non-covering"* condition and of a *"covering condition"* of said trees of said row.

According to the invention, each of the guiding assemblies comprises:
- a pair of guide arms connected to a corresponding upright so as to be mirrored with respect to said vertical reference plane;
- a pair of carriages each of which is slidingly coupled to a corresponding guide arm, a first carriage being connected, directly or indirectly, to the first covering element, a second carriage being connected, directly or indirectly, to the second covering element;
- a driving mechanism of the carriages causing them to slide along the corresponding guide arms, wherein this sliding is synchronised with the rotation of the drum so that the carriages move towards the vertical reference plane, when said drum wheel rotates in a direction that determines the winding of the covering elements, and away from said vertical plane when the drum wheel rotates in the opposite direction.

In accordance with a possible embodiment, each covering element comprises a plastic sheet of substantially rectangular shape whose long side is fixed to the drum so as to be parallel to its longitudinal axis.

Preferably, the long sides of the covering elements are fixed to the drum in diametrically opposed positions and oriented so that the covering elements emerge from opposite sides with respect to the vertical reference plane.

Even more preferably, for each covering element, a longitudinal edge, defining said long side is indirectly fixed to the drum by means of a connection profile inserted in a groove predefined on the drum, wherein this groove develops mainly along a rectilinear direction parallel to the longitudinal axis of the drum.

Preferably, for each covering element, the corresponding carriage of said first guiding assembly is connected to the corresponding carriage of said second guiding assembly by means of a tensioning wire, where said tensioning wire is connected, directly or indirectly, to the free longitudinal edge of the corresponding covering element.

Preferably, the tensioning wire is indirectly connected to the free longitudinal edge of the corresponding covering element through one or more connecting elastic wires.

In accordance with a possible embodiment thereof, the driving mechanism comprises a chain, a drive wheel, a pair of side idler wheels and a central idler wheel, wherein the drive wheel rotates synchronously with the drum, said chain being wound around the drive wheel so as to configure a ring with respect to a transversal observation plane orthogonal to the vertical reference plane; said chain is connected to the carriages so as to move them following the rotation of the drive wheel; each side idler wheel is rotatably connected to a corresponding of said guide arms.

In accordance with a possible embodiment thereof, a carriage of one of said guiding assemblies comprises a main body, traversed by a corresponding guide arm, wherein said main body supports rolling elements for relative movement of the first carriage with respect to said guide arm, wherein said carriage comprises a connecting plate to which the main body is fixed on its side facing the free end of the corresponding guide arm, wherein said carriage is connected to the corresponding covering element at the connecting plane.

In accordance with a possible embodiment thereof, an upright comprises at least one lower portion and at least one upper portion, where said lower portion is stably connectable to a base that can be constrained to the ground, and where said portions are fixed to each other through flange connection means.

In accordance with a possible embodiment thereof, the drum has a single-component configuration, i.e., it is formed by a single hollow cylindrical body. In an alternative embodiment, the drum comprises a plurality of cylindrical bodies connected to each other through transmission joints so as to be coaxial, wherein at least one of said cylindrical bodies is mechanically connected to the drive means, wherein the rotational torque generated by these drive means is transmitted to all the cylindrical bodies by said transmission joints.

In accordance with an embodiment, at least one protection module comprises a pre-tensioning assembly installed on at least one upright to offset the stresses to which the guide arms of the corresponding guiding assembly supported by said upright are subjected.

The present invention also relates to a protection system for protecting crops of fruit trees arranged in rows, where said system is characterized in that it comprises a plurality of covering modules according to one or more of the solutions indicated above.

In accordance with a possible embodiment thereof, the covering system comprises at least two protection modules along a same row, wherein said modules comprise a common upright; a drum of a first module is supported between a first head upright of the first module and the common upright, while another drum of said second module is supported between said common upright and a head upright of the second module, wherein said drums are mechanically connected so as to rotate synchronously.

In accordance with a further possible embodiment, at least one protection module arranged along a first row is mechanically linked to a corresponding further protection module arranged along a second row by means of a mechanical connecting element, wherein said connecting element connects the end of a guide arm installed on an upright of said protection module to one end of a guide arm installed on an upright of said corresponding further protection module of said second row.

### LIST OF FIGURES

Further features and advantages of the invention will be more apparent by examining the following detailed description of some preferred, but not exclusive, embodiments of a protection module, illustrated by way of non limiting example, with the aid of the accompanying drawings, wherein:
- Fig. 1 is a perspective view of an embodiment of a protection module according to the present invention in a non-covering configuration;
- Fig. 2 is a front view of the protection module of Fig. 1;
- Fig. 3 is a side view of the protection module of Fig. 1;
- Fig. 4 is a view of a group of components of the protection module of Fig. 1;
- Fig. 4A is an exploded view of the group of Fig. 4;
- Fig. 4B is an enlargement of the detail C of Fig. 4A;
- Fig. 5 is another group of components of the protection module of Fig. 4;
- Fig. 5A is an exploded view of the assembly of components of Fig. 5;
- Fig. 6 is a partially exploded perspective view of an upright of the protection module of Fig. 1;
- Fig. 7 is a perspective view of another upright of the protection module of Fig. 1;
- Figs. 8, 8A, 8B are views relating to an assembly of components supported by the upright of Fig. 6;
- Fig. 9 is a view of a possible embodiment of a covering element of a protection module according to the present invention;
- Fig. 9A is an enlargement of the detail A of Fig. 9;
- Figs. 10, 11A, 11B are schematic views relating to a principle of movement of covering elements of the protection module of Fig. 1;
- Fig. 12 is a schematic view relating to a possible embodiment of a covering element of a protection module according to the present invention;
- Fig. 13 is a view relating to a possible embodiment of a component of the protection module according to the invention;
- Figs. 13A and 13B are enlargements respectively of the detail B and of the detail D of Fig. 13;
- Figs. 14 and 14A are front views of the protection module of Fig. 1, respectively in a second configuration and in a third configuration;
- Figs. 15 and 15A are perspective views respectively of the protection module of Fig. 14 and of the protection module of Fig. 14A.
- Fig. 16 is a perspective view relating to a possible embodiment of a covering system comprising a plurality of protection modules according to the present invention;

The same reference numbers and letters in the figures identify the same elements or components.

### DETAILED DESCRIPTION

With reference to the aforesaid figures, the present invention refers to a protection module 1 (hereinafter simply module 1) that can be used to protect fruit trees, in particular, but not exclusively, cherry trees. More precisely, the module 1 can advantageously be used to protect (in particular against rain, hail or frost) a complete row or a portion of a row of fruit trees. The term "*row*" is meant as a group of fruit trees arranged in a row along a reference direction 101.

The protection module 1 comprises a support structure comprising a first upright 11 and a second upright 12, which are anchored to the ground so as to be aligned along a direction substantially coincident with the reference direction 101 along which the row to be protected develops. Preferably, the two uprights 11,12 are arranged at the ends of the rows so as to protect the row for the whole of its extension.

The module 1 according to the invention comprises a cylindrical drum 30 (or drum 30) supported by the two uprights 11, 12 so as to be able to rotate about its longitudinal axis 200. In this regard, as better indicated below, drive means 250, configured to determine the rotation of the drum 30 in both possible directions of rotation (clockwise and counter-clockwise) around the longitudinal axis 200, are provided. The drum 30 is supported over the trees of a row and oriented so that its longitudinal axis is substantially aligned with the direction along which the row develops (reference direction 101).

The module 1 comprises at least one first covering element 20A and one second covering element 20B fixed to the drum 30 so as to wind around it when it rotates in a first predetermined direction and so as to unwind from the drum 30 when it rotates in a second predetermined direction opposite the first. For this reason, the covering elements 20A, 20B are flexible elements.

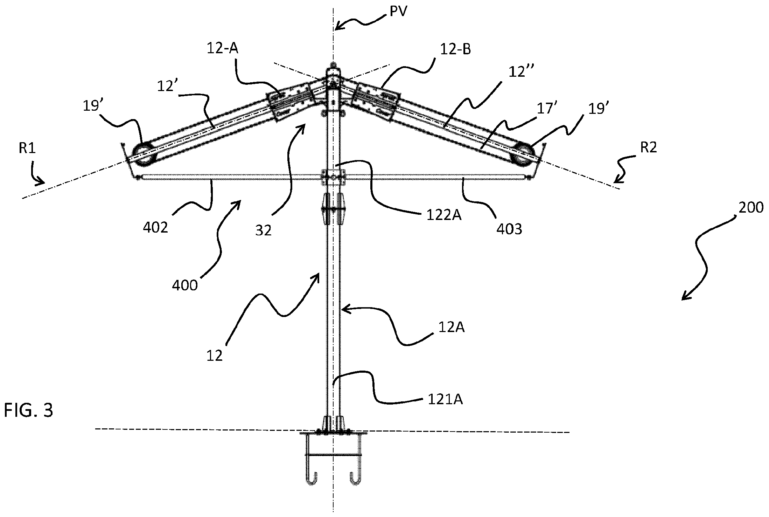

The module 1 according to the invention comprises a first guiding assembly 31 and a second guiding assembly 32 supported respectively by the first upright 11 and by the second upright 12. These guiding assemblies 31,32 are operatively connected to the two covering elements 20A, 20B to support and guide them (during the rotation of said drum 30) on opposite sides with respect to a vertical reference plane PV (see Fig. 3) containing the longitudinal axis 200 of the drum 30. In particular, these guiding assemblies 31, 32 guide the covering elements 20A, 20B between a first reference position (or retracted position, or closed position) and a second reference position (or extended position, or open position), where these positions are evaluated with respect to the vertical plane PV. The first position is characteristic of a *"non-covering"* condition, or in any case a condition of minimum protection. Instead, the second reference position is characteristic of a covering condition, meant as the maximum possible covering. In this condition, the covering elements 20A, 20B are above and consequently covering the fruit trees of the row so that they are protected from the elements (in particular against hail and rain).

The first reference position and the second reference position in substance define the position of minimum and of maximum extension of the covering elements 20A, 20B. In accordance with a preferred embodiment of the invention, the guiding assemblies 31, 32 are configured to allow the covering elements 20A, 20B to be moved to any position between the first position and the second position indicated above.

In accordance with a possible embodiment, the drive means 250 are of manual type. In practice, the drum 30 is rotated directly through the use of mechanical transmission means that are operated directly by an operator, for example through the use of a crank or an operating flywheel.

In a preferred embodiment, the drive means 250 are motorized, i.e., comprise a power take-off or a motor, for example of electric type, whose output shaft is connected, directly or indirectly by means of a mechanical transmission, to the drum 30. As better described below, the use of motorized means is particularly advantageous as it allows the protection module 1 to rapidly change configuration, quickly changing from the covering to the non-covering condition. Moreover, the motorized means can also be operated remotely, with obvious advantages in terms of management of its operation.

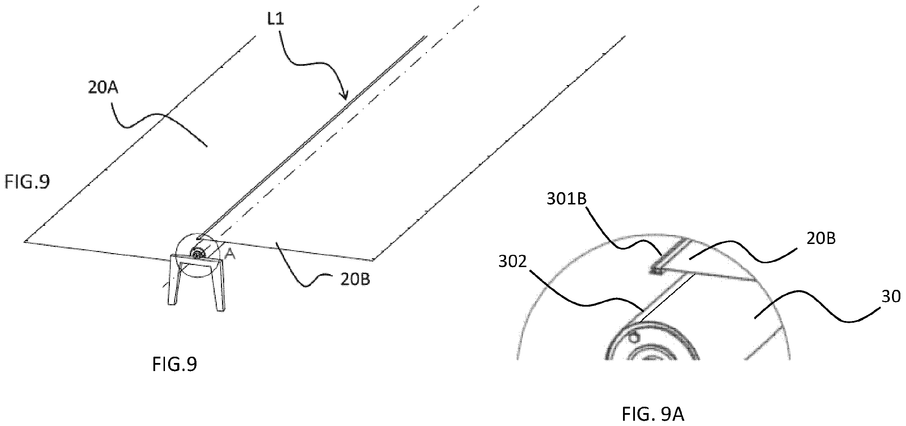

In accordance with a preferred embodiment (visible in the figures, in particular in Fig. 9), each covering element 20A, 20B is formed of a plastic sheet of substantially rectangular shape whose long side L1 is fixed to the drum 30 so as to be parallel to the longitudinal axis 200 of said drum.

For each covering element 20A, 20B, the corresponding sheet is preferably formed by a single piece of plastic material. However, it could be formed by a plurality of pieces connected to each other so as to define as a whole the rectangular shape of the element in question.

In accordance with the preferred embodiment schematized in Figs. 9, 10, 11, 11A, the long sides of the two covering elements 20A, 20B (hereinafter also indicated with the term sheets 20A, 20B) are fixed to the drum 30 in diametrically opposed positions. The sheets 20A, 20B are oriented so that in use they emerge on opposite sides with respect to the vertical reference plane PV indicated above. Preferably, for each sheet 20A, 20B, a longitudinal edge L1, coinciding with the long side of the rectangular shape, is indirectly fixed to the drum 30 by means of a connection profile 301A, 301B that is inserted in a groove 302 predefined on the drum 30. The groove 302 develops mainly along a rectilinear direction parallel to the rotation axis 200 of the drum 30 (see Fig. 9A). More precisely, for each sheet 20A, 20B, a longitudinal edge L1 is fixed to the connection profile 301 which also develops along a rectilinear direction. The connection profile 301A, 301B is fixed inside the corresponding groove 302, for example with pressure and/or interference, so as to be integral with the drum 30.

The use of connection profiles 301A, 301B to connect the two sheets 20A, 20B is particularly advantageous in terms of connection speed. The connection profiles 301A, 301B are selected to geometrically couple with the groove 302 so as to produce a form-fitting connection. The connection can be further guaranteed by providing connection screws.

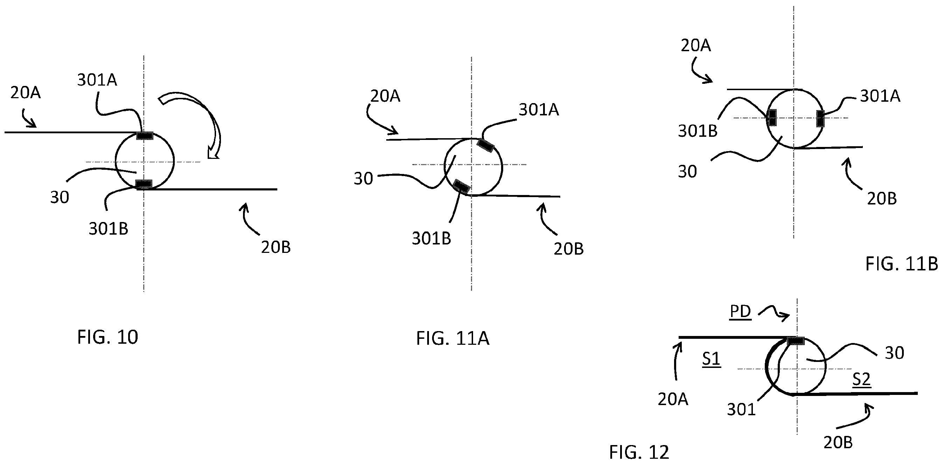

By observing Figs. 10, 11A and 11B the method according to which the two sheets 20A, 20B are wound around and unwound from the drum 30 can be understood. In Fig. 10, the two sheets 20A, 20B are schematized completely extended, i.e., substantially not wound around the drum 30. The two sheets 20A, 20B are connected to the drum 30 by means of two corresponding connection profiles 301A, 301B fixed in diametrically opposed positions in the corresponding grooves 302 defined in the outer surface of the drum 30.

With reference to Fig. 11A, following a rotation in clockwise direction (indicated by the arrow in Fig. 10), the two sheets 20A, 20B are simultaneously wound around the drum 30 with the same method. In fact, having the same dimensions and winding around the same drum 30, the wound part and the unwound part of the first sheet 20A will be the same as the corresponding parts of the second sheet 20B.

Fig. 11B schematizes the two sheets 20A, 20B at the end of the rotation in clockwise direction, i.e., in their condition of maximum winding. This condition forms the retracted position of the two sheets 20A, 20B. Starting from the condition of Fig. 11B, unwinding of the two sheets 20A, 20B is thus determined by a rotation in the opposite direction (i.e., counter-clockwise) of the drum 30 until it returns to the extended position schematized in Fig. 10.

In Figs. 9 to 11B the drum 30 and the sheets 20A, 20B are illustrated (schematized) separated from uprights 11, 12 of the module 1. According to the invention, by means of the guiding assemblies 31, 32, the two sheets 20A, 20B are wound around, and are unwound from, the drum 30 always remaining on the same side with respect to the vertical reference plane PV containing the rotation axis 200 of the drum 30.

In accordance with an alternative embodiment to the one described above, the two covering elements 20A, 20B can be defined by portions of a single sheet that is fixed to the drum 30 and then folded on itself, as shown in Fig. 12. This single sheet can be connected to the drum 30 through a connection profile 301 according to the methods described above for the other embodiment. A first part of the sheet thus emerges in a first semi-plane S1 defined with respect to a diametrical plane PD containing the connection profile. A second part of the sheet is instead folded and wound partially on the drum 30 to emerge in a second semi-plane S2, opposite the first, so as to reproduce, in substance, the same conditions schematized in Fig.10 which instead provides for the use of two separate sheets of the same dimensions.

In any case, regardless of the connection method to the drum 30, the sheets (or single sheet) defining the covering elements 20A, 20B can be made of one of the plastic materials typically used for these applications. In this regard, the covering elements 20A, 20B are preferably formed by a transparent polyethylene laminate of composite type, i.e., formed by multiple layers. In fact, this type of material offers high resistance not only in relation to hail or to heavy rain, but also to impulsive stresses caused by the wind. Advantageously, these sheets are supplied by the manufacturers with the desired widths and lengths. In particular, in reference to lengths, the longitudinal edge L1 of the sheets can even exceed ten metres in length.

In any case, the fact that the sheets (or alternatively the single sheet) defining the covering elements 20A, 20B can also be defined by a plurality of pieces connected to each other so as to reach the desired dimensions. In substance, it is possible for each sheet not to be produced in one piece.

Hereinafter in the description, the covering elements 20A, 20B will also be indicated with the term sheets 20A, 20B. However, depending on the type of fruit trees, the covering elements 20A, 20B might also be formed by nets with a fine mesh, i.e., such as to allow rainwater, but not hail, to pass through.

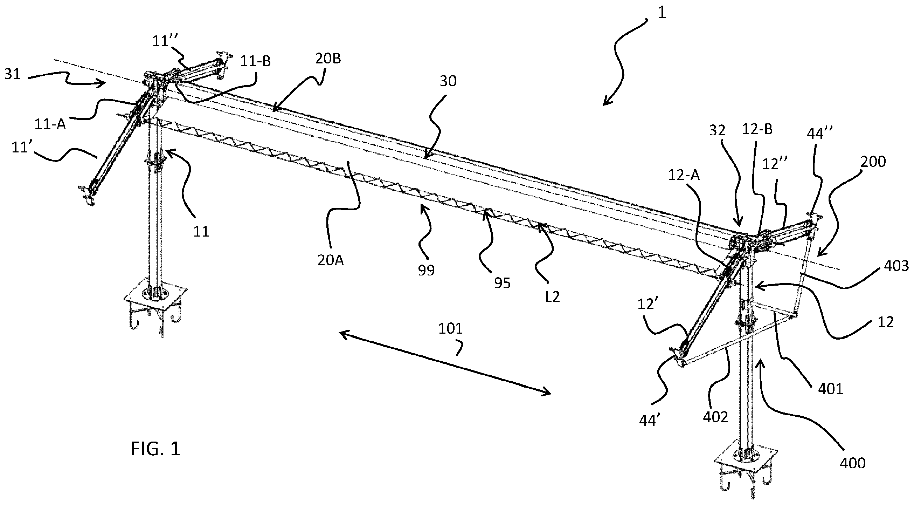

In accordance with a preferred embodiment (visible for example in Figs. 3 to 6), for each upright 11, 12, the corresponding guiding assembly 31, 32 comprises a pair of guide arms 11', 11"- 12', 12" connected so as to be mirrored with respect to the vertical plane PV defined above. In particular, for each upright 11, 12, the corresponding guide arms 11', 11"-12', 12" extend mainly along a rectilinear direction R1, R2 forming, preferably, an upside-down V, facing downward (see for example Figs. 1 and 3).

For each upright 11, 12, the corresponding guiding assembly 31, 32 further comprises a pair of carriages 11-A, 11-B, 12-A, 12-B each of which is slidingly coupled to a corresponding guide arm 11', 11", 12', 12" to slide, in both possible directions, along the rectilinear direction formed by said arm. For each guiding assembly 31, 32, a first carriage 11A-12A is connected, directly or indirectly, to the first covering element 20A, while a second carriage 11B, 12B is connected, directly or indirectly, to the second covering element 20B.

The term *"indirectly"* indicates that the connection between a carriage 11-A, 11-B, 12-A, 12-B and the corresponding covering element 20A, 20B is moderated by another element, such as a tensioning wire 99, according to a solution better described below.

For each upright 11, 12, the corresponding guiding assembly 31, 32 further comprises a driving mechanism of the carriages 11-A, 11-B, 12-A, 12-B configured so as to cause them to slide along the corresponding guide arms 11', 11", 12', 12", where this sliding is synchronised with the rotation of the drum 30. The term *"synchronised"* indicates that each rotation of the drum 30, in one or other direction, corresponds to a sliding of the carriages in one direction or in the opposite direction. In other words, the rotation by a given angle around the rotation axis 200 causes a corresponding movement of the carriages 11-A, 11-B, 12-A, 12-B along the guide arms 11', 11", 12', 12".

In particular, the driving mechanism causes sliding of the corresponding carriages 11-A, 11-B, 12-A, 12-B toward or away from the vertical reference plane PV depending on the direction of rotation of the drum 30. More precisely, the driving mechanism moves the corresponding carriages 11-A, 11-B, 12-A, 12-B away from the vertical reference plane PV when the drum 30 rotates in the direction that causes unwinding of the covering elements 20A, 20B from said drum. Instead, this driving mechanism causes the carriages 11-A, 11-B, 12-A, 12-B to move toward the vertical reference plane PV when the drum 30 rotates in the direction that causes winding of the covering elements 20A, 20B on said drum.

According to the invention, each covering element 20A-20B is thus provided with a pair of carriages 11-A, 12-A -- 11-B, 12-B that supports it during the rotation of the drum 30. Moving along the guide arms 11', 11"- 12', 12", each pair of carriages 11-A, 12-A -- 11-B, 12-B guides the corresponding covering element 20A, 20B along an extension plane from the retracted position to the extended position or vice versa according to the rotation of the drum 30.

In accordance with a preferred embodiment, visible for example in Fig. 1, the carriages 11-A, 12-A -- 11-B, 12-B are connected to the corresponding covering element 20A, 20B indirectly through the use of a tensioning wire 99. Each of the opposite ends of the tensioning wire 99, for example formed by a steel rod, is connected to one of the two carriages 11-A, 12-A -- 11-B, 12-B. In this way, the tensioning wire 99 moves together with the corresponding carriages 11-A, 12-A -- 11-B, 12-B and hence based on the direction of rotation of the drum 30. The tensioning wire 99 is connected, directly or indirectly, to the free longitudinal edge L2 of the covering element 20A, 20B which in this way remains extended and supported between the two uprights 11, 12 forming the support structure 2.

Preferably, the tensioning wire 99 is indirectly connected to the free longitudinal edge L2 of the corresponding covering element 20A, 20B through one or more connecting elastic wires 95. The term *"free longitudinal edge"* L2 indicates the edge of the covering element 20A-20B opposite the longitudinal edge L1 fixed to the drum 30 (see Fig. 9).

Preferably, a connecting band defining eyelets, to which said one or more connecting elastic wires 95 are attached, is fixed to the free longitudinal edge L2. In a preferred embodiment, a connecting elastic wire 95 is wound around the tensioning wire and passed through the eyelets according to a zig-zag arrangement visible in Fig. 1.

The use of connecting elastic wires 95 is particularly advantageous as it allows the tensioning wire 99 to be connected to the corresponding covering element 20A, 20B flexibly so as to absorb impulsive stress caused, for example, by gusts of wind. Moreover, an excessive load of the covering element, caused for example by a build-up of rainwater or hail in the case of heavy showers, determines the elongation of the elastic wires 95 allowing accumulations to be drained. In this way possible damage to the covering element 20A, 20B (for example tears or lacerations), which could occur due to said stress and which would require substantial repairs to or replacement of the covering elements, is avoided, or greatly reduced.

From this consideration, it is understood that the use of the solution described is particularly advantageous in the case in which the covering elements are formed by plastic covering sheets of single layer or multi-layer type.

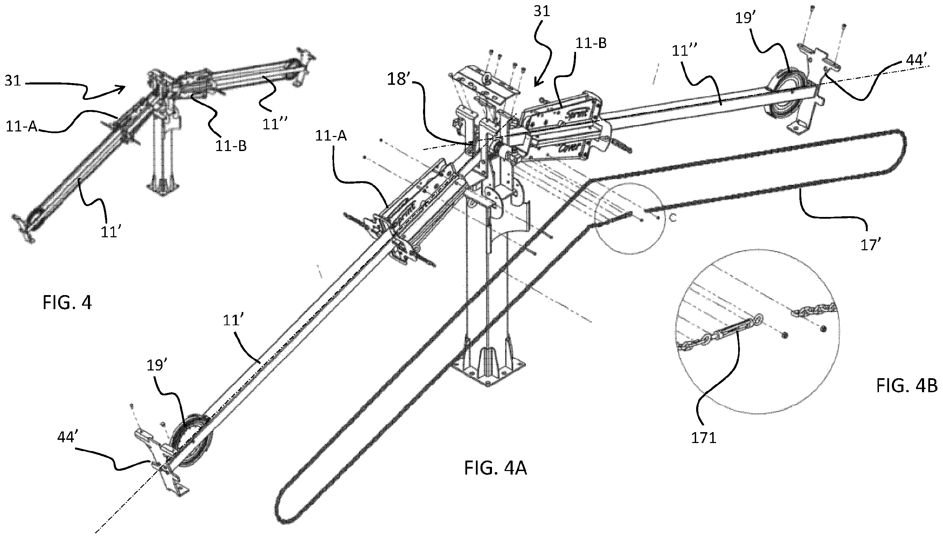

With reference to Figs. 4 to 4B, a possible embodiment of a driving mechanism of the first guiding assembly 31 supported by the first upright 11 is described in greater detail below. The solutions described are also valid for the second guiding assembly 32 supported by the upright 12 as the two guiding assemblies 31, 32 are identical in terms of structure and operating principle.

The driving mechanism comprises a chain 17', a drive wheel 18', a pair of side idler wheels 19' and a central idler wheel 16'. The drive wheel 18' wheel rotates synchronously with the drum 30. The term *"synchronous"* is meant to indicate that the drive wheel and the drum rotate at the same angular speed. Preferably, the drive wheel 18' and the central idler wheel 16' are arranged so that their rotation axis is placed in proximity of the vertical reference plane PV, preferably coincident therewith.

The chain 17' is wound around the drive wheel 18' and the idler wheels 19', 16' forming a loop with respect to a transversal observation plane orthogonal to the vertical reference plane PV. The chain 17' is connected to the two carriages 11-A, 11-B so as to move them following rotation of the drive wheel 18'. In particular, this connection is defined so that the chain 17' always acts tensioning both the carriages 11-A, 11-B driving them along the respective rectilinear direction R1, R2 formed by the corresponding guide arm 11', 11". For this purpose, the chain 17' is connected to one of the two carriages (for example the first carriage 11-A) above the corresponding guide arm 11', while it is connected to the other of the two carriages (to the secondo carriage 11-B to continue the example) under its guide arm 11".

With reference to the detail view of Fig. 4B, the chain 17' is preferably connected to one of the two carriages (the second 11-B in the figure considered) through a tensioning element 171 to regulate the tension of said chain.

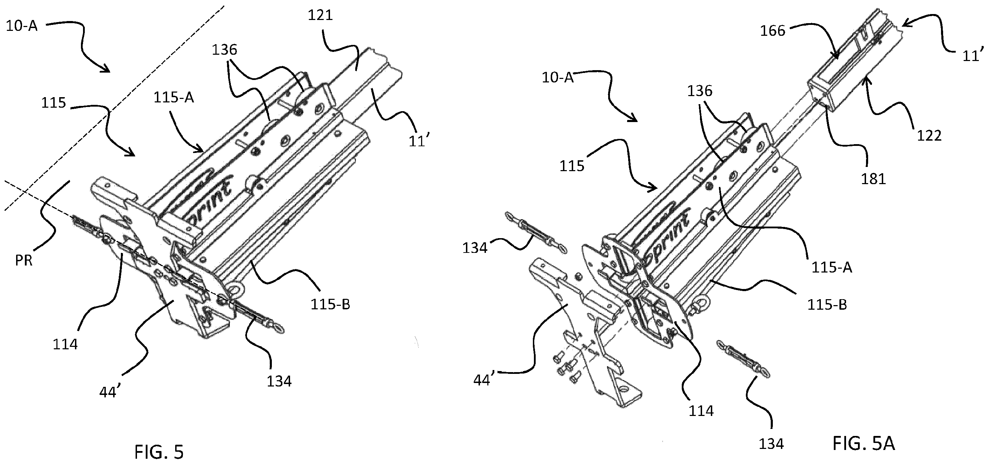

Each side idler wheel 19' is pivoted to one of the guide arms 11' in proximity of its cantilevered end. Preferably, each side idler wheel 19' is arranged inside a corresponding through seat 166 defined by means of the corresponding guide arm 11', 11" in proximity of the terminal part thereof, as can be seen from the detail in Fig. 5A. In this way, the rotation pin of each wheel 19' is supported by both the sides and, in use, the encumbrance of the wheel is partially included in that of the guide arm 11', 11".

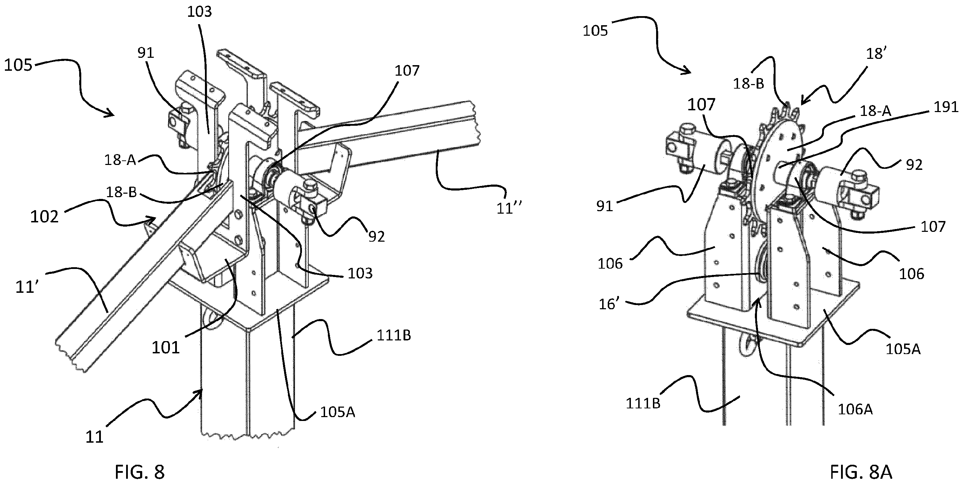

Preferably, the two side idler wheels 19' are oriented so that their rotation axis is parallel to that of the drive wheel 18' and consequently to the longitudinal axis 200 of the drum 30. The central idler wheel 16' is preferably arranged in a position under the drive wheel 18', i.e., so that its rotation axis is substantially on the same plane (vertical reference plane PV) in which the rotation axis of the drum 30 and the rotation axis of the drive wheel 18' are arranged (see Fig. 8A).

The drive wheel 18' is a toothed wheel configured to mesh the links of the chain 17' so that rotation of the drive wheel 18 determines sliding of the chain 17' and consequently of the carriages 11-A, 11-B connected by it. The idler wheels 19', 16' are instead in the form of pulleys configured so as to allow sliding of the chain 17'.

In an alternative embodiment (not visible in the figures), the chain 17' could be replaced by another flexible element, such as a toothed belt or another functionally equivalent means. Based on the configuration of the flexible element, the drive wheel and optionally the idler wheels can also have a different configuration to the one shown in the figures and described above.

Figs. 5 and 5A show in detail a possible embodiment of the first carriage 11-A of the guiding assembly 31 associated with the first upright 11. In particular, the first carriage 11-A comprises a hollow main body 115 to be traversed by the first guide arm 11' so as to move with respect to it. Preferably, rolling elements 136 are arranged between the first guide arm 11' and the main body 115 to guarantee the relative movement of the first carriage 11-A.

In the preferred, and hence not exclusive, embodiment, shown in the figures, the main body 115 has a symmetrical configuration with respect to a plane of symmetry PR parallel to the rectilinear direction R1 along which the first guide arm 11' develops. The main body 115 is formed by two halves 115-A, 115-B firmly fixed to each other and on opposite sides with respect to the reference plane PR. Each of the two parts 115-A, 115-B supports a plurality of wheels (rolling elements 136) that rest respectively against the upper surface 121 and against the lower surface 122 of the first guide arm 11' to allow a fluid movement of the first carriage 11-A.

The first carriage 11-A further comprises a connecting plate 114 to which the main body 115 is fixed on its outer side, i.e., on the side facing the free end of the guide arm 11'. The connecting plate 114 develops around the first guide arm 11' so as to allow sliding of the main body 115 fixed to it. Preferably, the connecting plate 114 develops substantially on a plane orthogonal to the rectilinear reference direction R1. As shown in Fig. 5A, it is preferably substantially configured as a cross.

In accordance with a preferred embodiment, the first carriage 11-A is connected to the first covering element 20A at the connecting plate 114. In particular, a tensioning element 134 is provided connected on one side to the connecting plate 114 and on the other side to the tensioning wire 99 described above.

The configuration of the first carriage 11-A described above is particularly effective in terms of fluidity and continuity of the movement. In this regard, the connecting plate 114, which optimizes the distribution of the stresses to which the first carriage 11-A is subjected, is particularly useful.

As can be seen from the figures, the second carriage 11-B of the first guiding assembly 31 and the two carriages 12-A, 12-B of the second guiding assembly 32 preferably have the same configuration as the first carriage 11-A. Therefore, in relation to the structure of the other carriages, reference should be made to the description above.

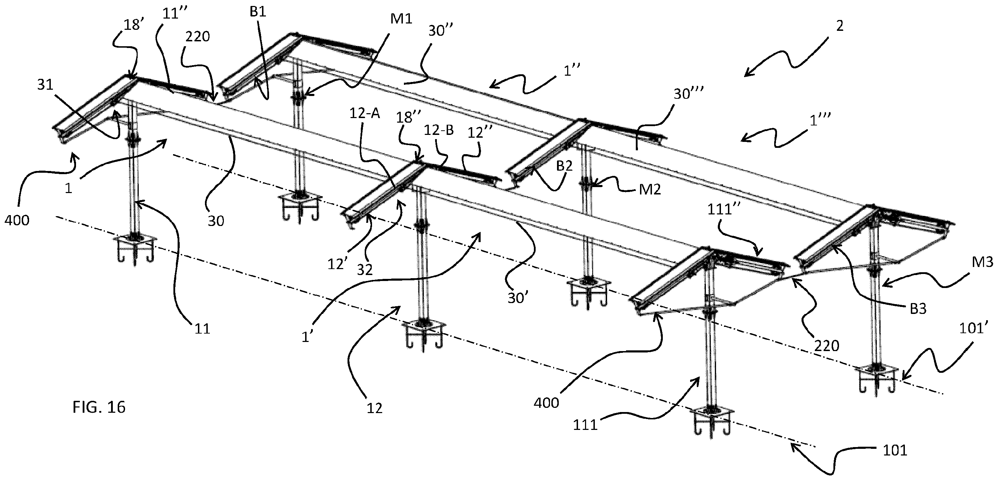

In accordance with a preferred embodiment, each guide arm 11', 11"-12', 12" is provided with a stroke stop element mounted in proximity of its cantilevered end. With reference to Fig. 5A, in the embodiment shown in the figures and in relation to the first guide arm 11', the stroke stop element is formed by a terminal plate 44' fixed to the end 181 of the first guide arm 11'. In practice, this terminal plate 44' defines a stop surface for the first carriage 11-A ensuring that it remains mechanically coupled to the first guide arm 11'. As better indicated below, the terminal plate 44' can advantageously also be used as an anchor for a pre-tensioning assembly of the two guide arms 11',11"-12',12" and/or to connect these to corresponding guide arms supported by an upright of another adjacent protection module, in accordance with a solution described below with reference to Fig. 16.

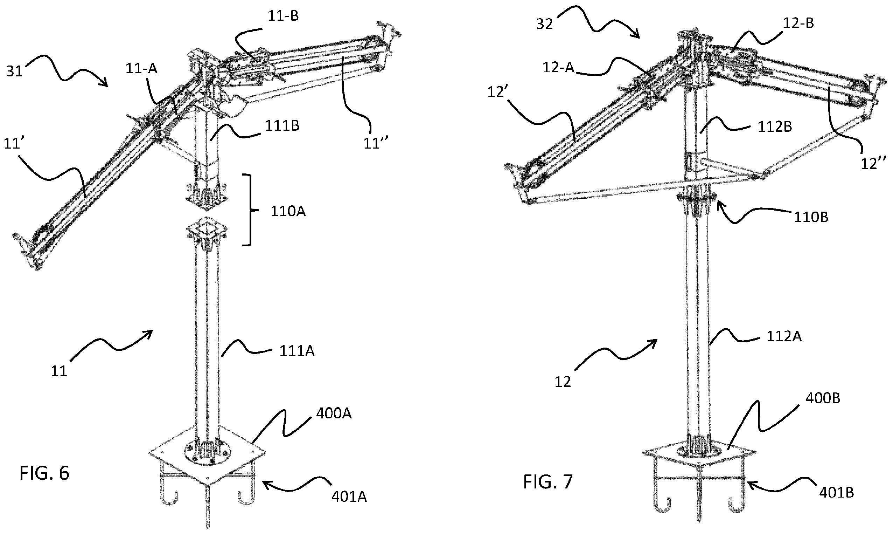

With reference to Figs. 6 or 7, in accordance with a preferred embodiment, each upright 11, 12 comprises at least one lower portion 111A, 112A and at least one upper portion 111B, 112B. The lower portion 111A is stably fixed to a base 400A, 400B previously constrained to the ground. The two portions 111A, 111B are fixed to each other, for example through flange connection means 110A, 110B.

The use of an upright formed by two connectable portions facilitates transport, without in fact affecting assembly times. In this regard, the extension of the upper portion 111B, 112B can substantially be *"standard",* i.e., the same for all applications. Instead, the extension of the lower portion 111A can be chosen according to the particular application, i.e., depending on the height of the fruit trees to be protected.

For example, in the case of cherry crops, the trees conventionally have an average height of around 5 metres. Therefore, in a possible construction method, the lower portion and the upper portion can be 3 and 2 metres, respectively. Instead, in the case of apple trees, the height could be less than 5 metres and, for this reason, the lower portion 111A could have a length of less than 3 metres.

There is the possibility of the uprights 11, 12 having a single portion structure, i.e., being configured in one piece.

In accordance with a preferred embodiment, the base 400A, 400B is constrained to the ground through an anchoring structure 401A, 401B that develops on the lower side of said base, i.e., the side opposite the one on which the corresponding upright 11A, 12A is connected. The anchoring structure 401A, 401B is embedded in a block of concrete, so that the base 400A, 400B, the anchoring structure 401A, 401B and the concrete form a single block. Preferably, this block is prefabricated and subsequently placed inside a hole excavated in the ground. In a less preferable embodiment, this block can be produced directly *"in situ"* by casting the concrete directly into the hole after having positioned the anchoring structure 401A, 401B in it.

As shown in Figs. 6 and 7, the anchoring structure 401A, 401B can comprise a plurality of metal components, with rectilinear, curved or mixed development, connected to one another so as to create a structure capable of firmly constraining the base 400A, 400B and consequently the corresponding upright 11A, 12A.

Overall, anchoring of the uprights 11, 12 to the ground makes them particularly sturdy, so that the protection module is very stable and capable of withstanding even high stresses.

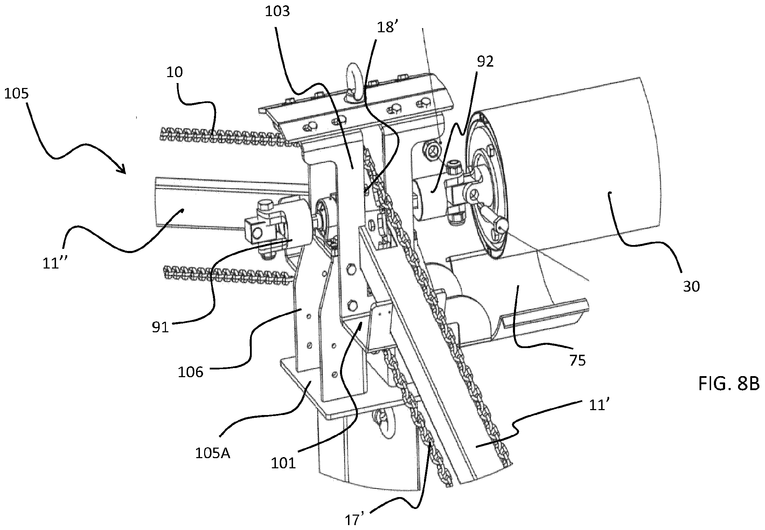

Figs. 8, 8A and 8B show a preferred embodiment of the head 105 of the uprights 11, 12 indicating the part to which the guide arms 11', 11", 12',12" of the corresponding guiding assemblies 31, 32 are connected. In particular, these figures show the head of the first upright 11 that also supports the drive wheel 18' of the driving mechanism of the carriages 11-A, 11-B of the first guiding assembly 31. With reference to Fig. 8A, the head 105 of the upright 11 comprises a supporting plate 105A from which two supports 106 emerge spaced apart from each other so as to define a housing space 106A between them. The pin 191 of the drive wheel 18' is supported through two rocking supports 107 each fixed above one of the two supports 106. In particular, the rocking supports 107 are configured so that the drive wheel 18' is arranged, at least in part, in the aforesaid space 106A.

In accordance with a preferred embodiment, the drive wheel 18' comprises a first disc-shaped portion 18-A integral with the rotation pin 191 and a second portion 18-B connected on one side of the first disc-shaped portion 18-A, wherein this second portion 18-B defines the teeth in which the chain 17' of the driving mechanism mesh. In particular, this second portion 18-B is formed by at least two parts both connected to the first portion 18-A through removable connecting means, such as screws. This configuration in two removable parts is particularly advantageous not only in terms of assembly, but above all in relation to possible maintenance operations. In fact, in the case of breakage of the toothed transmission or during ordinary maintenance, the two parts forming the second portion 18-B, i.e., the portion defining the teeth, can be removed without disconnecting the pin 191 from the roller bearings 107 i.e., without disconnecting these bearings from the supports 106. This possibility makes the maintenance operation very fast.

With reference again to Fig. 8A, the central idler wheel 16' is preferably supported by the two supports 106 so as to be arranged in the housing space 106A defined between them. In particular, the central idler wheel 16' and the drive wheel 18' are arranged so that their axes are parallel.

With reference again to Fig. 8A, in accordance with a preferred embodiment, one end of the pin 191 of the drive wheel 18' is connected to an outer joint 91, while the other end of the pin 191 is connected to an inner joint 92. The term *"inner"* indicates the joint that connects the drive wheel 18' to one end of the drum 30, while the term *"outer"* indicates the joint arranged on the opposite side.

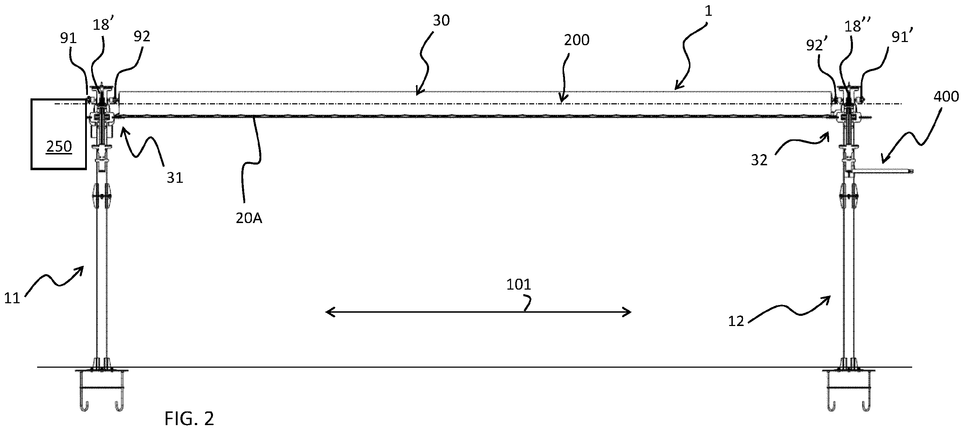

For at least one of the two uprights 11, 12, the outer joint 91 is connected to the drive means 250 through which the torque that allows rotation of the drum 30 is generated. With reference to Fig. 2, in the case illustrated, the drive means 250 are connected to the outer joint 91 associated with the first upright 11. Therefore, following their activation, the drive means 250 cause the rotation of the outer joint 91 and consequently of the drive wheel 18' of the driving mechanism of the first guiding assembly 31. Through the corresponding inner joint 92, the rotation is transferred to the drum 30. Through the inner joint 92' associated with the second upright 12, the rotation is then transferred from the drum 30 to the drive wheel (not visible) of the driving mechanism of the second assembly 32 associated with the second upright 12.

In relation to the second upright 12, also in this case an outer joint 91' can be provided to connect it to a drum of another adjacent protection module, according to a principle better described below with reference to Fig. 16.

Preferably, the inner joint 92, 92' is of universal type in order to allow transmission of the rotational torque even in the case in which the rotation axis of the drive wheel 18' is not coaxial to the rotation axis 200 of the drum 30.

Preferably, the outer joints 91, 91' are also of universal type.

With reference to Figs. 8 and 8B, the guide arms 11', 11" are connected to the head 105 of the upright 11 each through a corresponding anchor bracket 102. The latter comprises a pair of plates 103 rigidly connected, for example by welding, to one end of a corresponding guide arm 11, 11'. Each plate 103 is fixed to a corresponding support 106 of the head of the upright 11. The anchor bracket 102 further comprises a support portion 101 connected to the plates 103 and shaped so as to support the corresponding guide arm 11, 11' in a position distal from said plates. As shown in the figures, the plates 103 are also spaced axially so as to allow rotation of the drive wheel 18' on one side and sliding of the chain 17' on the other, according to what was indicated above.

With reference in particular to Fig. 8B, in accordance with a preferred embodiment, a fall-prevention element 75 is used to support the drum 30 during the assembly steps and/or to prevent it from falling to the ground in the case in which its connection to the inner joint 92 were to fail. In the case illustrated, this fall prevention element 75 is a cradle shaped body anchored to the head of the first upright 11 and positioned so as to emerge under the corresponding terminal part of the drum 30 adjacent to said first upright 11. In particular, the shaped body is oriented so that the curvature of the cradle is consistent with that of the terminal part of the drum 30 so as to accommodate it if it were to rest against it or fall.

The technical solutions described above in relation to the head 105 of the first upright 11 (solutions shown in particular in Figs. 8, 8A and 8B) are to be considered valid, *mutatis mutandis,* also for the second upright 12.

In accordance with a possible preferred embodiment, the drum 30 is defined by a hollow cylindrical body, preferably made of metal. The drum 30 can thus have a single-component configuration, i.e., formed by a single body supported at the ends by the support frames 11, 12. In this embodiment, one of the ends of the drum is connected to the drive means 250 that determine its rotation in the two possible directions.

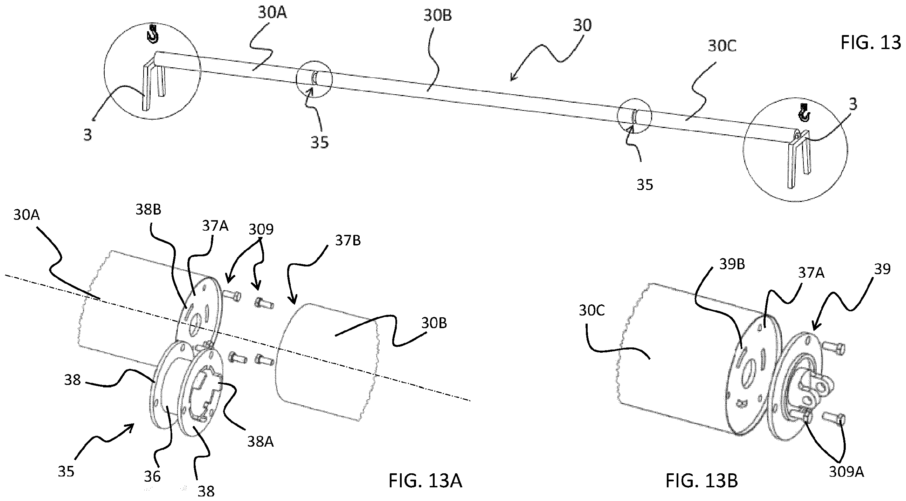

However, according to a preferred embodiment shown in Fig. 13, the drum 30 can be defined by a plurality of cylindrical bodies 30A, 30B, 30C having the same outer diameter and connected to each other through transmission joints 35 so as to be coaxial and hence be able to rotate around the same longitudinal axis 200. In this embodiment, one of the cylindrical bodies 30A, 30B, 30C is therefore mechanically connected to the drive means 250, where the rotational torque generated by these means is transmitted to all the cylindrical bodies by the transmission joints 35.

With reference to Figs. 13 and 13A, these show a drum 30 comprising three hollow cylindrical bodies 30A, 30B, 30C, preferably made of metal. In Fig. 13, the drum 30 is shown mounted on support stands 3, i.e., separated from the uprights 11, 12.

Each of the cylindrical bodies 30A, 30B, 30C is longitudinally delimited by two connecting walls 37A, 37B defined at the opposite ends thereof. In this embodiment, two transmission joints 35 are therefore provided, where each joint firmly connects the connecting wall 37B of one of the cylindrical bodies 30A, 30B, 30C to the connecting wall 37A of another immediately adjacent cylindrical body.

Once again with reference to Fig. 13, this shows a central cylindrical body 30B having an extension greater than that of the other two side cylindrical bodies 30A, 30C. The central cylindrical body 30B comprises two opposite connecting walls, each connected, through a corresponding transmission joint 35, to a connecting wall of another cylindrical body 30A, 30C.

In a possible embodiment visible in Fig. 13A, the transmission joint 35 comprises a cylindrical body 36 and two flanges 38 arranged at the ends of the cylindrical body 36. Each flange 38 is fixed to a connecting wall 37A, 37B of a corresponding cylindrical body 30A, 30B, 30C through screw connection means 309. Moreover, each flange 38 is coupled to the corresponding connecting wall 37A, 37B through axial coupling means 38A-38B configured so as to transmit the rotational torque between the two coupled parts (flange 38 and connecting wall 37A-37B).

In the case illustrated in the figures, the axial coupling means comprise male elements 38A defined by teeth that emerge axially from the flanges 38 each to be inserted into a corresponding female element 38B defined by a groove obtained through the corresponding connecting wall 37.

The use of the coupling means is particularly advantageous as it facilitates the transmission of torque between the cylindrical bodies, preventing this transmission from burdening the screw connection elements. In fact, the latter have the sole function of axially connecting the cylindrical bodies 30A, 30B, 30C. In general, the multiple component configuration of the drum 30 is extremely advantageous, above all in terms of its transport. In fact, the drum 30 can reach lengths of even 12-15 metres. The advantage of being able to transport cylindrical bodies of smaller length, e.g., 3-4 metres) is evident, as these can be assembled in the vicinity of the row in which the protection module 1 is to be installed.

With reference to Fig. 13B, regardless of the single component or multiple component configuration of the drum 30, its ends are preferably connected to the corresponding inner joint 92 through a connection conceptually and functionally equivalent to the one formed by the joint 35 described above with reference to Fig. 13A. In particular, the drum 30 comprises a connecting wall 37A, to which a transmission plate 39 is connected by means of screw connection means 309A and axial coupling means 39B. This transmission plate is connected to an inner joint 92, 92' which, as indicated above, is preferably of universal type.

In accordance with a preferred embodiment visible in the figures, the protection module 1 comprises a pre-tensioning assembly 400 installed on an upright 11, 12 to oppose the stresses to which the guide arms 11, 11' of the corresponding guiding assembly 31, 32 are subjected, above all when the covering elements 20A, 20B are in the extended position, i.e., when the protection module is in the *"covering"* condition in which the covering elements 20A, 20B are subjected to loads caused by the wind or in any case by the difference in pressure on the two main sides. These loads tend to bend the guide arms 11', 11", 12', 12" associated with the uprights. The use of a pre-tensioning assembly 400 therefore protects the structural integrity of the guiding assemblies 31, 32 and more in general of the module 1.

Fig. 1 shows a possible embodiment of a pre-tensioning assembly 400 associated with the second upright 12. In the case in which the protection module 1 is used individually, then the pre-tensioning assembly 400 can be applied to one or to both of the uprights 11, 12. Instead, when the protection module 1 is part of a covering system 2 comprising several modules linked to protect a same row, then the pre-tensioning assembly 400 is only applied to the head uprights according to a principle described below with reference to Fig. 16.

In the case illustrated, the pre-tensioning assembly 400 comprises three rods arranged substantially on a horizontal plane (as visible in Fig. 3). A first rod 401 is connected to the second upright 12 and emerges axially from it toward the outside, i.e., from the opposite side to the one on which the drum 30 is positioned. The structure 400 further comprises a second rod 402 and a third rod 403, each of which is connected at a first end to the free end of the first rod 401 (i.e., the end opposite the end connected to the second upright 12) and at a second end to the end part of one of the guide arms 12', 12" of the second guiding assembly 32. In particular, for each of the rods 402, 403, the second end is connected to the corresponding plate 44', 44" forming the stroke stop element connected to the free end of the corresponding guide arm 12',12".

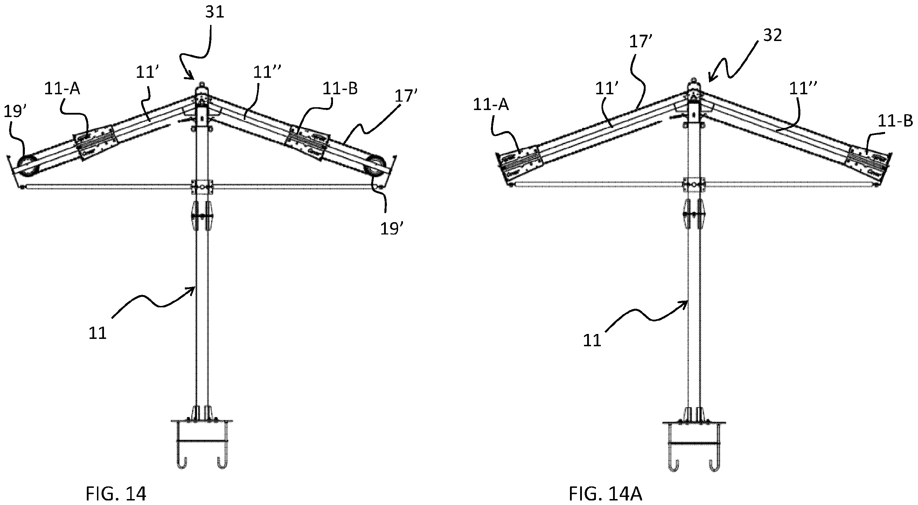

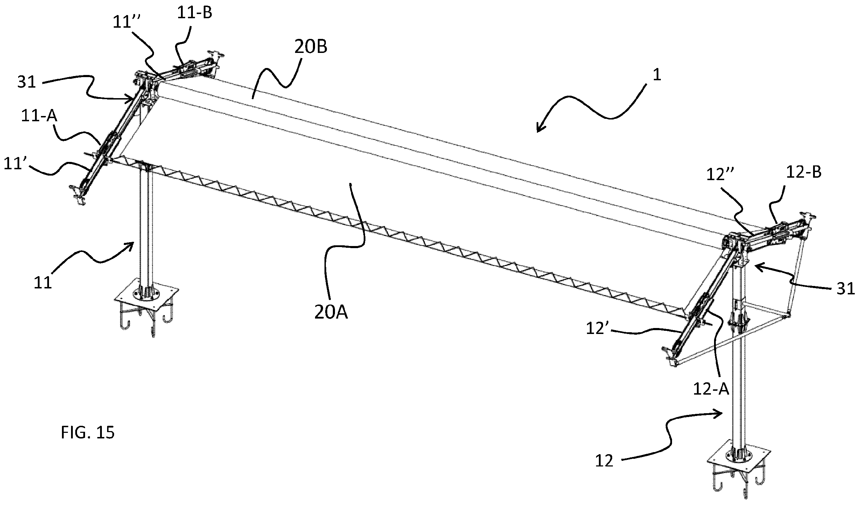

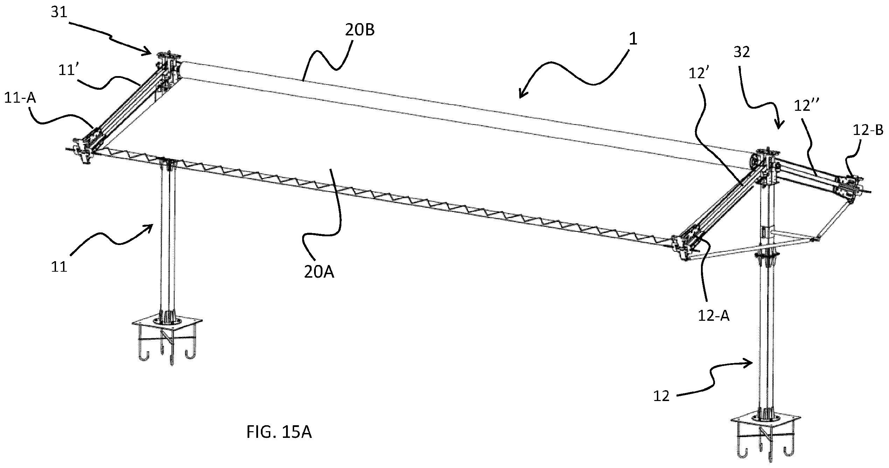

With reference to Figs. 1 to 3 and to Figs. 14, 14A, 15, 15A, the operating principle of a protection module 1 according to the invention is described. In sunny weather or in weather conditions favourable for the growth and development of the fruit, the module 1 is maintained in the *non-covering* configuration, so that the covering elements 20A, 20B (hereinafter indicated for the sake of simplicity also as sheets 20A, 20B) are in the retracted position shown in Figs. 1 to 3. In this condition, the fruit trees are minimally covered and substantially exposed to direct sunlight.

When the weather worsens, or when worsening is forecast, the module 1 is taken to the *covering* configuration. For this purpose, through the drive means 250, the drum 30 is rotated in the direction that causes unwinding of the sheets 20A, 20B. The drive wheel 18' of the driving mechanism of the first guiding assembly 31, which is connected to the drum 30 through an inner joint 92, rotates simultaneously with the drum 30. The rotation of the drum 30 is also transferred to the drive wheel 18" of the driving mechanism of the second guiding assembly 32 by means of another inner joint 92'. For each guiding assembly 31, 32, the rotation of the corresponding drive wheel 18', 18" determines the movement of the corresponding driving chain 17', 17" and consequently the movement of the corresponding carriages 11-A, 11-B, 12-A, 12-B away from the vertical plane PV. Each sheet 20A, 20B is guided between the two uprights 11, 12 by a pair of carriages 11-A, 12-A - 11-B, 12-B each belonging to one of the guiding assemblies 31, 32. In particular, each sheet 20A, 20B is held taut between the two uprights 11, 12 by the tensioning wire 99 that connects the carriages 11-A, 12-A - 11-B, 12-B to each other and to which the free longitudinal edge of said sheet is connected.

Figs. 14 and 14A show the module 1 during the movement of the two sheets 20A, 20B toward the extended position. In substance, in these figures, the module 1 takes an intermediate configuration between the *"covering"* and *"non-covering"* configuration. Considering the first sheet 20A, by comparing Figs. 1 and 15 it can be observed how through the corresponding carriages 11-A, 12-A (each of a corresponding guiding assembly 31, 32) it is guided in its extension substantially along a plane. The same occurs for the second sheet 20B on the opposite side with respect to the vertical plane PV.

Figs. 14A and 15A show the module 1 after it has reached the covering configuration so that the sheets 20A-20B are in the extended position. This position is reached when the corresponding carriages 11-A, 12-A - 11B, 12-B reach the stroke stop position at the free end of the corresponding guide arms 11, 11', 12', 12". In this configuration, the module offers its maximum coverage to the fruit trees of the row. The maximum coverage can be useful not only in the case of rain and hail, but also at particular times of the day, for example against night frost or frosts during the period in which the fruit trees are in blossom.

With reference to Figs. 14 and 14A, when the covering elements 20A, 20B are extended, the upside-down V-shaped arrangement of the guide arms 11', 11", 12', 12" forms with the related uprights 11, 12 a sort of covering hut with two pitches, each arranged on one side of the vertical reference plane PV.

In any case, regardless of the operating principle, the covering sheets 20A, 20B can be extended to any intermediate position between the first reference position and the second reference position. In practice, the module 1 can take any intermediate configuration between the minimum covering and the maximum covering configuration.

The principle for moving the sheets 20A, 20B described above allows a fast transition from the non-covering to the covering configuration.

Advantageously, the change of configuration can be made in the order of a few seconds, above all in the case in which the drive means comprise motor means. However, also in the case of manual operation, the change of configuration can be fast by suitably configuring the transmission ratio that sets the rotation speed of the drum and hence the driving speed of the carriages 11-A, 11-B, 12-A, 12-B of the guiding assemblies 31, 32. In any case, the configuration of the system can be changed by only one operator or at most two operators, unlike what occurs in covering systems of conventional type.

The possibility of fast and frequent movements of the covering sheets allows a reduction in the respiratory stress of the plants, allowing greater photosynthesis, which improves the colour of the fruit, the content of dry substance and consequently also its preservability and the shelf-life. Moreover, more frequent exposure to UV rays makes the plant tissue of the fruit more compact, sterilizes part of the spores that are potentially damaging for the crop, generating a healthy product with a lower incidence of fungal diseases.

In general, with the module 1 according to the invention it is possible to obtain high quality marketable productions even in years characterized by frequent rainfall. Moreover, the module 1 allows very early and early fruits, in particular cherries, to be grown and produced even when they are particularly sensitive to the phenomenon of cracking.

The module 1 according to the invention is suitable to be easily linked to other modules of similar construction to define a protection system for fruit trees arranged in rows. In this regard, Fig. 16 shows a protection system 2 (or more simple system 2) comprising four modules 1,1',1",1‴ to protect trees arranged along two rows identified respectively by the directions 101, 101' parallel to each other. In particular, two modules 1-1' are arranged so that the corresponding drum 30, 30' is aligned with a first direction 101, while the other two modules 1", 1‴ are arranged so that the corresponding drum 30", 30‴ is aligned with the second direction 101'. The four modules 1-1'-1"-1‴ in Fig. 16 are shown in the *non-covering* condition, i.e., with the covering elements wound around the corresponding drums 30, 30', 30", 30‴.

In accordance with a first embodiment, visible in Fig. 16, along the first row (direction 101), the system 2 is provided with at least two modules 1, 1' that have a common upright (indicated with 12) and consequently a common guiding assembly (indicated with 32). The uprights indicated with the references 11 and 111, i.e., those that are *"not common"* are indicated hereinafter with the term *"head uprights".* A first drum 30, relating to the first module 1, is therefore supported between a first head upright 11 and the common upright 12, while a second drum 30' is supported between the common upright 12 and the second head upright 111.

The drum of the first module 1 is mechanically connected to the drum 30' of the second module 1' at the common upright 12 through the two transmission joints, in accordance with a principle already described above. Therefore, the two drums 30, 30' rotate synchronously. With reference to Fig. 16, the drive means 250 (not illustrated) can be connected, for example, to the drive wheel (indicated with 18') of the driving mechanism of the guiding assembly 31 of the head upright 11 of the first module 1. The torque is transferred from the drive wheel 18' to the drum 30 of the first module 1, through a first inner joint 92, and then to the drive wheel (indicated with 18") of the driving mechanism of the common upright 12, through a further inner joint 92' associated with the first module 1. From the drive wheel 18" the torque is transferred to the drum 30' of the second module 1' through the same principle.

As mentioned above, the guiding assembly 32 associated with the second upright 12 is also common to the two modules 1, 1'. For each guide arm 12', 12" of the guiding assembly 32, the corresponding carriage 12-A, 12-B is connected on one side to a covering element of the first module 1 and on the other side to a covering element of the second module 1'. In this regard, Fig. 5A shows a connection method of the carriage 12-A, 12-B provided with a suitable tensioning element 134 for each corresponding covering element.

In the embodiment of the system shown in Fig. 16, the two modules 1", 1‴ arranged along the second row (direction 101') are linked in the same way as those of the first row (direction 101).

In general, the possibility of using the same drive means 250 to move the drums 30, 30', 30", 30‴ of at least two modules 1, 1', 1", 1‴ arranged along the same row is very advantageous in terms of time. However, it would be possible for each module 1, 1', 1", 1‴ to be provided with independent drive means and therefore its configuration could vary independently from that of the other modules placed side by side longitudinally. With this solution, a selective operation based on the needs of each part of the row is possible.

It can be observed how the configuration of a protection module allows the modular construction of a covering system. According to the length of the row it will thus be possible to arrange a plurality of modules whose length can be established depending on the total length of the row to be protected.

Again with reference to Fig. 16, considering the first row (direction 101), for example, on the head uprights 11, 111, a corresponding pre-tensioning assembly 400 is preferably installed for the purposes described above. In general, also when more than two modules are present, the pre-tensioning assembly 400 can be installed on the head uprights 11, 111 i.e., on those uprights that are not common to two adjacent modules.

In accordance with an embodiment, visible in Fig. 16, the modules 1,1' for covering the first row (direction 101) are substantially side by side with the corresponding modules 1", 1‴ for covering the second row (101'). In particular, each module 1, 1' of the first row is mechanically linked to a corresponding module 1", 1‴ of the second-row side by side with it in transversal direction i.e., orthogonal to the directions 101, 101'. Preferably, a mechanical connecting element 220, for example in the form of a rod, is provided to connect the end of a guide arm 11", 12", 111" installed on an upright 11, 12,111 along a first row, to an end of a guide arm (indicated with B1, B2, B3) installed on an upright (indicated with M1, M2, M3) provided along the second row. In particular, in the case shown in Fig. 16, the connecting element 220 connects the terminal plates fixed to the free end of the corresponding guide arms installed on the two uprights linked in transversal direction.

Overall, the possibility of linking the modules 1, 1'-1",1"' in a longitudinal direction and in a transversal direction makes it possible to obtain a protection system in which distribution of the stresses on each module is moderated by the presence of the other modules. In other words, each module contributes to the structural stability of the other modules with the advantage of being able to create a protection system also in particularly windy areas, as the wind is the main cause of these stresses.

In general, the protection module according to the invention is extremely advantageous also in relation to assembly. In fact, the technical solutions described above allow the various components to be assembled directly *"in situ"* greatly facilitating transport. In fact, the various components can be easily transported even using medium-sized and small vehicles that can easily reach the crops to be protected. In practice, the solutions described form an assembly kit of the protection module that can be easily adapted to existing crops. The scope of the invention is limited to the appended claims.

## Claims

1. A protection module (1) for total or partial protection of a row of fruit trees, wherein said module comprises:
- a support structure (11, 12) comprising a first upright and a second upright (12) anchored to the ground so as to be spaced along a reference direction (101) corresponding to the direction along which said row develops;
- a drum (30) supported by said uprights (11, 12) so as to occupy a position above said trees of said row;
- drive means (250) configured to rotate said drum (30) in both possible directions of rotation;
- at least one first covering element (20A) and at least one second cover element (20B) fixed to said drum (30) for winding around, or unwinding from, said drum according to its direction of rotation;
- a first guiding assembly (31) and a second guiding assembly 32) supported respectively by said first upright (11) and by said second upright (12), wherein said guiding assemblies (31,32) are operatively connected to said covering elements (20A, 20B) to guide them, during the rotation of said drum (30), between a first reference position and a second reference position, on opposite sides with respect to a vertical reference plane (PV) containing the longitudinal axis (200) of said drum (30), said reference positions being characteristic, respectively, of a non-covering condition and of a covering condition of said trees of said row,
**characterized in that** each of said guide assemblies (31, 32) comprises:
- a pair of guide arms (11', 11"- 12', 12") connected to a corresponding of said uprights (11, 12) so as to be mirrored with respect to said vertical reference plane (PV);
- a pair of carriages (11-A, 11-B, 12-A, 12-B) each of which is slidingly coupled to a corresponding guide arm (11', 11"- 12', 12"), a first carriage (11A-12A) being connected, directly or indirectly, to said first covering element (20A), a second carriage (11B, 12B) being connected, directly or indirectly, to said second covering element (20B);
- a driving mechanism of said carriages (11-A, 11-B, 12-A, 12-B) causing them to slide along the corresponding guide arms (11', 11", 12"), wherein said sliding is synchronised with the rotation of said drum (30) so that said carriages (11-A, 11-B, 12-A, 12-B) move towards said vertical reference plane (PV) when said drum (30) rotates in a direction that determines the winding of said covering elements (20A, 20B), and away from said vertical reference plane (PV) when said drum (30) rotates in the opposite direction.

2. Protection module (1) according to claim 1, wherein each of said covering elements (20A, 20B) comprises a plastic sheet of substantially rectangular shape whose long side (L1) is fixed to said drum (30) so as to be parallel to said longitudinal axis (200).

3. Protection module (1) according to claim 2, wherein the long sides (L1) of said covering elements (20A, 20B) are fixed to said drum (30) in diametrically opposed positions and oriented so that said covering elements emerge from opposite sides with respect to said vertical reference plane (PV).

4. Protection module (1) according to claim 3, wherein, for each covering element (20A, 20B), a longitudinal edge, defining said long side (L1), is indirectly fixed to said drum (30) by means of a connection profile (301A, 301B) that is inserted in a groove (302) predefined on said drum (30), wherein said groove (302) develops mainly along a rectilinear direction parallel to said longitudinal axis (200) of said drum (30).

5. Protection module (1) according to any one of the claims 1 to 4, wherein for each covering element (20A, 20B), the corresponding carriage (11-A, 12-A) of said first guide assembly (31) is connected to the corresponding carriage (12-A, 12-B) of said second guide assembly (32) by means of a tensioning wire (99), wherein said tensioning wire (99) is connected, directly or indirectly, to the free longitudinal edge (L2) of the corresponding covering element (20A, 20B).

6. Protection module (1) according to claim 5, wherein said tensioning wire (99) is indirectly connected to said free longitudinal edge (L2) of the corresponding covering element (20A, 20B) through one or more connecting elastic wires (95).

7. Protection module (1) according to any one of claims 1 to 6, wherein said driving mechanism comprises a chain (17'), a drive wheel (18'), a pair of side idler wheels (19') and a central idler wheel (16'), wherein said drive wheel (18') rotates synchronously with said drum (30), said chain (17') being wound around said drive wheel (18'), so as to form a ring with respect to a transversal observation plane, orthogonal to said vertical reference plane (PV), said chain (17') being connected to said carriages (11-A, 11-B) so as to move them following the rotation of said drive wheel, wherein each side idler wheel (19') is arranged in proximity of a terminal part of a corresponding part of said guide arms (11', 11"), wherein said drive wheel (18') and said central idler wheel (16') are arranged in a position adjacent to said vertical reference plane (PV).

8. Protection module (1) according to any one of claims 1 to 7, wherein said at least one carriage (11-A, 11-B, 12-A, 12-B) of one of said guide assemblies (31, 32) comprises a main body (115) traversed by a corresponding guide arm (11', 11", 12") and supporting rolling elements (136) for relative movement of said first carriage (11-A. 11-A, 11-B, 12-A, 12-B) with respect to said corresponding guide arm (11', 11", 12', 12"), wherein said at least one carriage (11-A, 11-B, 12-A, 12-B) comprises a connecting plate (114) to which said main body (115) is fixed on its side facing the free end of the corresponding guide arm (11', 11', 11-B, 12"), wherein said at least one carriage (11-A, 11-B, 12-A, 12-B) is connected to the corresponding covering element (20A, 20B) at said connecting plate (114).

9. Protection module (1) according to any one of claims 1 to 8, wherein said at least one upright (11, 12) comprises at least one lower portion (111A, 112A) and at least one upper portion (111B, 112B), wherein said lower portion (111A) is stably connectable to a base (400A, 400B) that can be constrained to the ground, and wherein said portions (111A, 111B) are fixed to each other through flange connection means (110A, 110B).

10. Protection module (1) according to any one of claims 1 to 9, wherein said drum (30) has a single-component configuration or it comprises a plurality of cylindrical bodies (30A, 30B, 30C) connected to each other through transmission joints (35) so as to be coaxial, wherein at least one of said cylindrical bodies (30A, 30B, 30C) is mechanically connected to said drive means (250), wherein the rotational torque generated by said drive means is transmitted to all the cylindrical bodies by said transmission joints (35).

11. Protection module (1) according to any one of claims 1 to 10, wherein said protection module (1) comprises a pre-tensioning assembly (400) installed on at least one upright (11, 12) to oppose the stresses to which the guide arms (11, 11') of the corresponding guide assembly (31, 32) supported by said upright are subjected.

12. A covering system (2) of crops arranged in rows, **characterised in that** it comprises a plurality of protection modules (1, 1', 1") according to any one of claims 1 to 11.

13. Covering system (2) according to claim 12, wherein said covering system (2) comprises at least two protection modules (1, 1') along a same row (101), wherein said modules (1,1') comprise a common upright (12) and wherein a drum (30) of a first protection module (1) is supported between a first head upright (11) of said first protection module (1) and said common upright (12), while another drum (30') of a second protection module (1') is supported between said common upright (12) and a head upright (111) of said second protection module (1'), wherein said drums (20, 30') are mechanically connected so as to rotate synchronously.

14. Covering system (2) according to claim 12 or 13, wherein at least one protection module (1, 1') arranged along a first row (101) is mechanically linked to a corresponding further module (1", 1") arranged along a second row (101) by means of a mechanical connecting element (220), wherein said connecting element (220) connects the end of a guide arm (11', 12',111') installed on an upright (11, 12, 111) of said module (1,1") to an end of a guide arm (B1, B2, B3) installed on an upright (M1, M2, M3) of said corresponding further module (1",1") of said second row (101').

## Patentansprüche

1. Schutzmodul (1) zum vollständigen oder teilweisen Schutz einer Reihe von Obstbäumen, wobei das Modul umfasst:
- eine Trägerstruktur (11, 12), die einen ersten Pfosten und einen zweiten Pfosten (12) umfasst, die so am Boden verankert sind, dass sie entlang einer Referenzrichtung (101) beabstandet sind, die der Richtung entspricht, entlang der sich die Reihe erstreckt;
- eine Trommel (30), die von den Pfosten (11, 12) so getragen wird, dass sie eine Position oberhalb der Bäume der Reihe einnimmt;
- Antriebsmittel (250), die dazu konfiguriert sind, die Trommel (30) in beide möglichen Drehrichtungen zu drehen;
- mindestens ein erstes Abdeckelement (20A) und mindestens ein zweites Abdeckelement (20B), die an der Trommel (30) befestigt sind, zum Aufwickeln auf oder Abwickeln von der Trommel je nach deren Drehrichtung;
- eine erste Führungsanordnung (31) und eine zweite Führungsanordnung (32), die vom ersten Pfosten (11) beziehungsweise dem zweiten Pfosten (12) getragen werden, wobei die Führungsanordnungen (31, 32) funktional mit den Abdeckelementen (20A, 20B) verbunden sind, um sie während der Drehung der Trommel (30) zwischen einer ersten Referenzposition und einer zweiten Referenzposition auf gegenüberliegenden Seiten in Bezug auf eine vertikale Referenzebene (PV), die die Längsachse (200) der Trommel (30) enthält, zu führen, wobei die Referenzpositionen für einen nicht abdeckenden Zustand beziehungsweise einen abdeckenden Zustand der Bäume der Reihe charakteristisch sind,
**dadurch gekennzeichnet, dass** jede der Führungsanordnungen (31, 32) umfasst:
- ein Paar Führungsarme (11', 11"- 12', 12"), die mit einem entsprechenden der Pfosten (11, 12) so verbunden sind, dass sie in Bezug auf die vertikale Referenzebene (PV) gespiegelt sind;
- ein Paar Schlitten (11-A, 11-B, 12-A, 12-B), von denen jeder gleitend mit einem entsprechenden Führungsarm (11', 11"- 12', 12") gekoppelt ist, wobei ein erster Schlitten (11A-12A) direkt oder indirekt mit dem ersten Abdeckelement (20A) verbunden ist, wobei ein zweiter Schlitten (11B, 12B) direkt oder indirekt mit dem zweiten Abdeckelement (20B) verbunden ist;
- einen Antriebsmechanismus für die Schlitten (11-A, 11-B, 12-A, 12-B), der sie entlang der entsprechenden Führungsarme (11', 11", 12") gleiten lässt, wobei das Gleiten mit der Drehung der Trommel (30) so synchronisiert ist, dass sich die Schlitten (11-A, 11-B, 12-A, 12-B) auf die vertikale Referenzebene (PV) zubewegen, wenn sich die Trommel (30) in eine Richtung dreht, die das Aufwickeln der Abdeckelemente (20A, 20B) bestimmt, und von der vertikalen Referenzebene (PV) weg, wenn sich die Trommel (30) in die entgegengesetzte Richtung dreht.

2. Schutzmodul (1) nach Anspruch 1, wobei jedes der Abdeckelemente (20A, 20B) eine Kunststofffolie von im Wesentlichen rechteckiger Form umfasst, deren lange Seite (L1) so an der Trommel (30) befestigt ist, dass sie zur Längsachse (200) parallel ist.

3. Schutzmodul (1) nach Anspruch 2, wobei die langen Seiten (L1) der Abdeckelemente (20A, 20B) an diametral gegenüberliegenden Positionen an der Trommel (30) befestigt und so ausgerichtet sind, dass die Abdeckelemente in Bezug auf die vertikale Referenzebene (PV) aus gegenüberliegenden Seiten hervorstehen.

4. Schutzmodul (1) nach Anspruch 3, wobei bei jedem Abdeckelement (20A, 20B) eine Längskante, die die lange Seite (L1) definiert, indirekt an der Trommel (30) mittels eines Verbindungsprofils (301A, 301B) befestigt ist, das in eine an der Trommel (30) vordefinierte Nut (302) eingesetzt ist, wobei sich die Nut (302) hauptsächlich entlang einer geradlinigen Richtung parallel zur Längsachse (200) der Trommel (30) erstreckt.

5. Schutzmodul (1) nach einem der Ansprüche 1 bis 4, wobei bei jedem Abdeckelement (20A, 20B) der entsprechende Schlitten (11-A, 12-A) der ersten Führungsanordnung (31) mit dem entsprechenden Schlitten (12-A, 12-B) der zweiten Führungsanordnung (32) mittels eines Spanndrahts (99) verbunden ist, wobei der Spanndraht (99) direkt oder indirekt mit der freien Längskante (L2) des entsprechenden Abdeckelements (20A, 20B) verbunden ist.

6. Schutzmodul (1) nach Anspruch 5, wobei der Spanndraht (99) über einen oder mehrere elastische Verbindungsdrähte (95) indirekt mit der freien Längskante (L2) des entsprechenden Abdeckelements (20A, 20B) verbunden ist.

7. Schutzmodul (1) nach einem der Ansprüche 1 bis 6, wobei der Antriebsmechanismus eine Kette (17'), ein Antriebsrad (18'), ein Paar seitlicher Leerlaufräder (19') und ein zentrales Leerlaufrad (16') umfasst, wobei sich das Antriebsrad (18') synchron mit der Trommel (30) dreht, wobei die Kette (17') so um das Antriebsrad (18') gewickelt ist, dass sie einen Ring in Bezug auf eine transversale Beobachtungsebene bildet, die zur vertikalen Referenzebene (PV) orthogonal ist, wobei die Kette (17') so mit den Schlitten (11-A, 11-B) verbunden ist, dass sie diese der Drehung des Antriebsrads folgend bewegt, wobei jedes seitliche Leerlaufrad (19') in der Nähe eines Endteils eines entsprechenden Teils der Führungsarme (11', 11") angeordnet ist, wobei das Antriebsrad (18') und das zentrale Leerlaufrad (16') in einer Position neben der vertikalen Referenzebene (PV) angeordnet sind.

8. Schutzmodul (1) nach einem der Ansprüche 1 bis 7, wobei der mindestens eine Schlitten (11-A, 11-B, 12-A, 12-B) einer der Führungsanordnungen (31, 32) einen Hauptkörper (115) umfasst, der von einem entsprechenden Führungsarm (11', 11", 12") durchquert wird und Rollelemente (136) zur relativen Bewegung des ersten Schlittens (11-A, 11-A, 11-B, 12-A, 12-B) in Bezug auf den entsprechenden Führungsarm (11', 11", 12', 12") trägt, wobei der mindestens eine Schlitten (11-A, 11-B, 12-A, 12-B) eine Verbindungsplatte (114) umfasst, an der der Hauptkörper (115) auf seiner dem freien Ende des entsprechenden Führungsarms (11', 11', 11-B, 12") zugewandten Seite befestigt ist, wobei der mindestens eine Schlitten (11-A, 11-B, 12-A, 12-B) an der Verbindungsplatte (114) mit dem entsprechenden Abdeckelement (20A, 20B) verbunden ist.

9. Schutzmodul (1) nach einem der Ansprüche 1 bis 8, wobei der mindestens eine Pfosten (11, 12) mindestens einen unteren Abschnitt (111A, 112A) und mindestens einen oberen Abschnitt (111B, 112B) umfasst, wobei der untere Abschnitt (111A) stabil mit einer Basis (400A, 400B) verbunden werden kann, die am Boden festgemacht werden kann, und wobei die Abschnitte (111A, 111B) über Flanschverbindungsmittel (110A, 110B) aneinander befestigt sind.

10. Schutzmodul (1) nach einem der Ansprüche 1 bis 9, wobei die Trommel (30) eine Einzelkomponentenkonfiguration aufweist oder eine Vielzahl von zylindrischen Körpern (30A, 30B, 30C) umfasst, die über Übertragungsgelenke (35) so miteinander verbunden sind, dass sie koaxial sind, wobei mindestens einer der zylindrischen Körper (30A, 30B, 30C) mechanisch mit den Antriebsmitteln (250) verbunden ist, wobei das von den Antriebsmitteln erzeugte Drehmoment von den Übertragungsgelenken (35) auf alle zylindrischen Körper übertragen wird.

11. Schutzmodul (1) nach einem der Ansprüche 1 bis 10, wobei das Schutzmodul (1) eine Vorspannanordnung (400) umfasst, die an mindestens einem Pfosten (11, 12) installiert ist, um den Spannungen entgegenzuwirken, denen die Führungsarme (11, 11') der entsprechenden Führungsanordnung (31, 32), die vom Pfosten getragen wird, ausgesetzt sind.

12. Abdecksystem (2) für Kulturpflanzen, die in Reihen angeordnet sind, **dadurch gekennzeichnet, dass** es eine Vielzahl von Schutzmodulen (1, 1', 1") nach einem der Ansprüche 1 bis 11 umfasst.

13. Abdecksystem (2) nach Anspruch 12, wobei das Abdecksystem (2) mindestens zwei Schutzmodule (1, 1') entlang derselben Reihe (101) umfasst, wobei die Module (1, 1') einen gemeinsamen Pfosten (12) umfassen und wobei eine Trommel (30) eines ersten Schutzmoduls (1) zwischen einem ersten Kopfpfosten (11) des ersten Schutzmoduls (1) und dem gemeinsamen Pfosten (12) getragen wird, während eine andere Trommel (30') eines zweiten Schutzmoduls (1') zwischen dem gemeinsamen Pfosten (12) und einem Kopfpfosten (111) des zweiten Schutzmoduls (1') getragen wird, wobei die Trommeln (20, 30') mechanisch so verbunden sind, dass sie sich synchron drehen.

14. Abdecksystem (2) nach Anspruch 12 oder 13, wobei mindestens ein entlang einer ersten Reihe (101) angeordnetes Schutzmodul (1, 1') mit einem entsprechenden weiteren Modul (1", 1"), das entlang einer zweiten Reihe (101) angeordnet ist, mittels eines mechanischen Verbindungselements (220) mechanisch verknüpft ist, wobei das Verbindungselement (220) das Ende eines Führungsarms (11', 12', 111'), der an einem Pfosten (11, 12, 111) des Moduls (1, 1") installiert ist, mit einem Ende eines Führungsarms (B1, B2, B3) verbindet, der an einem Pfosten (M1, M2, M3) des entsprechenden weiteren Moduls (1", 1") der zweiten Reihe (101') installiert ist.

## Revendications

1. Module de protection (1) pour la protection totale ou partielle d'une rangée d'arbres fruitiers, dans lequel ledit module comprend :
- une structure de support (11, 12) comprenant un premier montant et un second montant (12) ancrés au sol de manière à être espacés le long d'une direction de référence (101) correspondant à la direction le long de laquelle se développe ladite rangée ;
- un tambour (30) supporté par lesdits montants (11, 12) de manière à occuper une position au-dessus desdits arbres de ladite rangée ;
- des moyens d'entraînement (250) configurés pour faire tourner ledit tambour (30) dans les deux sens de rotation possibles ;
- au moins un premier élément de recouvrement (20A) et au moins un second élément de recouvrement (20B) fixés audit tambour (30) destinés à s'enrouler autour, ou se dérouler, dudit tambour selon son sens de rotation ;
- un premier ensemble de guidage (31) et un second ensemble de guidage (32) supportés respectivement par ledit premier montant (11) et par ledit second montant (12), dans lequel lesdits ensembles de guidage (31, 32) sont reliés de manière opérationnelle auxdits éléments de recouvrement (20A, 20B) pour les guider, pendant la rotation dudit tambour (30), entre une première position de référence et une seconde position de référence, sur des côtés opposés par rapport à un plan de référence vertical (PV) contenant l'axe longitudinal (200) dudit tambour (30), lesdites positions de référence étant caractéristiques, respectivement, d'un état de non-recouvrement et d'un état de recouvrement desdits arbres de ladite rangée,
**caractérisé en ce que** chacun desdits ensembles de guidage (31, 32) comprend :
- une paire de bras de guidage (11', 11"- 12', 12") reliés à un montant correspondant desdits montants (11, 12) de manière à être mis en miroir par rapport audit plan de référence vertical (PV) ;
- une paire de chariots (11-A, 11-B, 12-A, 12-B), chacun étant couplé de manière coulissante à un bras de guidage (11', 11"- 12', 12") correspondant, un premier chariot (11A-12A) étant relié, directement ou indirectement, audit premier élément de recouvrement (20A), un second chariot (11B, 12B) étant relié, directement ou indirectement, audit second élément de recouvrement (20B) ;
- un mécanisme d'entraînement desdits chariots (11-A, 11-B, 12-A, 12-B) les faisant coulisser le long des bras de guidage (11', 11", 12") correspondants, dans lequel ledit coulissement est synchronisé avec la rotation dudit tambour (30) de telle sorte que lesdits chariots (11-A, 11-B, 12-A, 12-B) se déplacent vers ledit plan de référence vertical (PV) lorsque ledit tambour (30) tourne dans un sens qui détermine l'enroulement desdits éléments de recouvrement (20A, 20B), et s'éloignent dudit plan de référence vertical (PV) lorsque ledit tambour (30) tourne dans le sens opposé.

2. Module de protection (1) selon la revendication 1, dans lequel chacun desdits éléments de recouvrement (20A, 20B) comprend une feuille de plastique de forme sensiblement rectangulaire dont le côté long (L1) est fixé audit tambour (30) de manière à être parallèle audit axe longitudinal (200).

3. Module de protection (1) selon la revendication 2, dans lequel les côtés longs (L1) desdits éléments de recouvrement (20A, 20B) sont fixés audit tambour (30) dans des positions diamétralement opposées et orientés de telle sorte que lesdits éléments de recouvrement émergent de côtés opposés par rapport audit plan de référence vertical (PV).

4. Module de protection (1) selon la revendication 3, dans lequel, pour chaque élément de recouvrement (20A, 20B), un bord longitudinal, définissant ledit côté long (L1), est indirectement fixé audit tambour (30) au moyen d'un profilé de liaison (301A, 301B) qui est inséré dans une rainure (302) prédéfinie sur ledit tambour (30), dans lequel ladite rainure (302) se développe principalement le long d'une direction rectiligne parallèle audit axe longitudinal (200) dudit tambour (30).

5. Module de protection (1) selon l'une quelconque des revendications 1 à 4, dans lequel pour chaque élément de recouvrement (20A, 20B), le chariot (11-A, 12-A) correspondant dudit premier ensemble de guidage (31) est relié au chariot (12-A, 12-B) correspondant dudit second ensemble de guidage (32) au moyen d'un fil tendeur (99), dans lequel ledit fil tendeur (99) est relié, directement ou indirectement, au bord longitudinal libre (L2) de l'élément de recouvrement (20A, 20B) correspondant.

6. Module de protection (1) selon la revendication 5, dans lequel ledit fil tendeur (99) est relié indirectement audit bord longitudinal libre (L2) de l'élément de recouvrement (20A, 20B) correspondant par l'intermédiaire d'un ou plusieurs fils élastiques de liaison (95).

7. Module de protection (1) selon l'une quelconque des revendications 1 à 6, dans lequel ledit mécanisme d'entraînement comprend une chaîne (17'), une roue motrice (18'), une paire de roues folles latérales (19') et une roue folle centrale (16'), dans lequel ladite roue motrice (18') tourne de manière synchrone avec ledit tambour (30), ladite chaîne (17') étant enroulée autour de ladite roue motrice (18'), de manière à former un anneau par rapport à un plan d'observation transversal, orthogonal audit plan de référence vertical (PV), ladite chaîne (17') étant reliée auxdits chariots (11-A, 11-B) de manière à les déplacer suite à la rotation de ladite roue motrice, dans lequel chaque roue folle latérale (19') est agencée à proximité d'une partie terminale d'une partie correspondante desdits bras de guidage (11', 11"), dans lequel ladite roue motrice (18') et ladite roue folle centrale (16') sont agencées dans une position adjacente audit plan de référence vertical (PV).

8. Module de protection (1) selon l'une quelconque des revendications 1 à 7, dans lequel ledit au moins un chariot (11-A, 11-B, 12-A, 12-B) d'un desdits ensembles de guidage (31, 32) comprend un corps principal (115) traversé par un bras de guidage (11', 11", 12") correspondant et supportant des éléments roulants (136) pour un déplacement relatif dudit premier chariot (11-A, 11-A, 11-B, 12-A, 12-B) par rapport audit bras de guidage (11', 11", 12', 12") correspondant, dans lequel ledit au moins un chariot (11-A, 11-B, 12-A, 12-B) comprend une plaque de liaison (114) à laquelle ledit corps principal (115) est fixé sur son côté tourné vers l'extrémité libre du bras de guidage (11', 11', 11-B, 12") correspondant, dans lequel ledit au moins un chariot (11-A, 11-B, 12-A, 12-B) est relié à l'élément de recouvrement (20A, 20B) correspondant au niveau de ladite plaque de liaison (114).

9. Module de protection (1) selon l'une quelconque des revendications 1 à 8, dans lequel ledit au moins un montant (11, 12) comprend au moins une partie inférieure (111A, 112A) et au moins une partie supérieure (111B, 112B), dans lequel ladite partie inférieure (111A) peut être reliée de manière stable à une base (400A, 400B) qui peut être contrainte au sol, et dans lequel lesdites parties (111A, 111B) sont fixées l'une à l'autre par l'intermédiaire de moyens de liaison à bride (110A, 110B).

10. Module de protection (1) selon l'une quelconque des revendications 1 à 9, dans lequel ledit tambour (30) présente une configuration monocomposant ou il comprend une pluralité de corps cylindriques (30A, 30B, 30C) reliés entre eux par le biais de raccords de transmission (35) de manière à être coaxiaux, dans lequel au moins un desdits corps cylindriques (30A, 30B, 30C) est relié mécaniquement auxdits moyens d'entraînement (250), dans lequel le couple de rotation généré par lesdits moyens d'entraînement est transmis à tous les corps cylindriques par lesdits raccords de transmission (35).

11. Module de protection (1) selon l'une quelconque des revendications 1 à 10, dans lequel ledit module de protection (1) comprend un ensemble de pré-tension (400) installé sur au moins un montant (11, 12) pour s'opposer aux contraintes auxquelles sont soumis les bras de guidage (11, 11') de l'ensemble de guidage (31, 32) correspondant supporté par ledit montant.

12. Système de recouvrement (2) de cultures agencées en rangées, **caractérisé en ce qu'**il comprend une pluralité de modules de protection (1, 1', 1") selon l'une quelconque des revendications 1 à 11.

13. Système de recouvrement (2) selon la revendication 12, dans lequel ledit système de recouvrement (2) comprend au moins deux modules de protection (1, 1') le long d'une même rangée (101), dans lequel lesdits modules (1, 1') comprennent un montant commun (12) et dans lequel un tambour (30) d'un premier module de protection (1) est supporté entre un premier montant de tête (11) dudit premier module de protection (1) et ledit montant commun (12), en même temps qu'un autre tambour (30') d'un second module de protection (1') est supporté entre ledit montant commun (12) et un montant de tête (111) dudit second module de protection (1'), dans lequel lesdits tambours (20, 30') sont reliés mécaniquement de manière à tourner de manière synchrone.

14. Système de recouvrement (2) selon la revendication 12 ou 13, dans lequel au moins un module de protection (1, 1') agencé le long d'une première rangée (101) est relié mécaniquement à un autre module (1", 1") correspondant agencé le long d'une seconde rangée (101) au moyen d'un élément de liaison mécanique (220), dans lequel ledit élément de liaison (220) relie l'extrémité d'un bras de guidage (11', 12', 111') installé sur un montant (11, 12, 111) dudit module (1, 1") à une extrémité d'un bras de guidage (B1, B2, B3) installé sur un montant (M1, M2, M3) dudit autre module (1", 1") correspondant de ladite seconde rangée (101').
